# EUROPEAN PATENT APPLICATION

(11) **EP 4 072 224 A1**
(43) Date of publication of application: **12.10.2022**
(21) Application number: 19958514.2
(22) Date of filing: 31.12.2019
(51) Int. Cl.: H04W 72/12

(54) **DATA TRANSMISSION METHOD AND APPARATUS**

(71) Applicant: Huawei Technologies Co., Ltd., Shenzhen, Guangdong 518129 (CN)
(72) Inventor: DING, Mengying, Shenzhen, Guangdong 518129 (CN); LIAO, Shuri, Shenzhen, Guangdong 518129 (CN); LIU, Rongkuan, Shenzhen, Guangdong 518129 (CN); ZHANG, Peng, Shenzhen, Guangdong 518129 (CN); XU, Hua, Shenzhen, Guangdong 518129 (CN)
(74) Representative: Isarpatent
(86) International application number: PCT/CN2019/130975
(87) International publication number: WO 2021/134717

(57) **Abstract**

This application discloses a data transmission method and apparatus, and the method includes: A first terminal device receives DCI from a network device, where the DCI is used to schedule uplink transmission or sidelink transmission, and the DCI is used to indicate data transmission of the first terminal device, or used to indicate the first terminal device to assist in forwarding data of a second terminal device; and the first terminal device performs uplink transmission or sidelink transmission based on the DCI. According to embodiments of this application, during user cooperation, the DCI is used to indicate whether transmission scheduled by using the DCI is used to transmit data of the terminal device or cooperatively forward data of another terminal device, to improve accuracy of the data transmission.

## Description

### TECHNICAL FIELD

This application relates to the field of communication technologies, and in particular, to a data transmission method and apparatus.

### BACKGROUND

User cooperation is one of features mainly supported by a 5th generation (5th generation, 5G) communication system, and can significantly improve a system capacity and network coverage. A main idea of the user cooperation is to use an idle user in a network to help a transmission user perform transmission. Therefore, the transmission user obtains transmission power and an antenna capability of the idle user, and antennas of a plurality of users form a virtual multiple-input multiple-output (multiple-input multiple-out-put, MIMO) system for transmission.

In user communication cooperation, when a user receives scheduling from a network device, how to distinguish whether data that needs to be transmitted belongs to the user or another user is a problem that needs to be resolved in this application.

### SUMMARY

Embodiments of this application provide a data transmission method and apparatus.

According to a first aspect, a data transmission method is provided, including: A first terminal device receives downlink control information DCI from a network device, where the DCI is used to schedule uplink transmission or sidelink transmission, and the DCI is used to indicate data transmission of the first terminal device, or used to indicate the first terminal device to assist in forwarding data of a second terminal device; and the first terminal device performs uplink transmission or sidelink transmission based on the DCI.

During user cooperation, the DCI is used to indicate whether transmission scheduled by using the DCI is used to transmit data of the terminal device or cooperatively forward data of another terminal device, to improve accuracy of data transmission.

According to a second aspect, a data transmission method is provided, including: sending data of a second terminal device or data of a first terminal device to the first terminal device, and sending downlink control information DCI to the first terminal device, where the DCI is used to schedule sidelink transmission, and the DCI is used to indicate data transmission of the first terminal device, or used to indicate the first terminal device to assist in forwarding data of the second terminal device.

According to a third aspect, a data transmission method is provided, including: sending downlink control information DCI to a first terminal device, where the DCI is used to schedule uplink transmission, and the DCI is used to indicate data transmission of the first terminal device, or used to indicate the first terminal device to assist in forwarding data of a second terminal device; and receiving data transmitted by the first terminal device.

With reference to the first aspect, the second aspect, or the third aspect, in an implementation, if the DCI is used to indicate the first terminal device to assist in forwarding the data of the second terminal device, the DCI is further used to indicate an identifier of the second terminal device.

When the DCI is used to indicate to cooperatively forward data of another terminal device, the DCI is further used to indicate an identifier of the another terminal device, to further improve accuracy of data transmission.

With reference to the first aspect, the second aspect, or the third aspect, or any one of the implementations of the first aspect, the second aspect, or the third aspect, in still another implementation, the DCI includes first indication information, where the first indication information is used to indicate the data transmission of the first terminal device, or used to indicate the first terminal device to assist in forwarding the data of the second terminal device.

Indication information carried in the DCI is used to indicate whether transmission scheduled by using the DCI is used for data transmission of the terminal device or cooperatively forwarding data of another terminal device, and no signaling indication is required, thereby reducing signaling overheads.

With reference to the first aspect, the second aspect, or the third aspect, or any one of the implementations of the first aspect, the second aspect, or the third aspect, in still another implementation, if the DCI is used to indicate the first terminal device to assist in forwarding the data of the second terminal device, the DCI further includes second indication information, where the second indication information is used to indicate an identifier of the second terminal device.

When the DCI is used to indicate to cooperatively forward data of another terminal device, indication information carried in the DCI is used to indicate an identifier of the another terminal device, and no signaling indication is required, thereby reducing signaling overheads.

With reference to the first aspect, the second aspect, or the third aspect, or any one of the implementations of the first aspect, the second aspect, or the third aspect, in still another implementation, the first terminal device stores a first identifier and at least one second identifier of the first terminal device; and if the DCI is scrambled by the first identifier, the DCI is used to indicate the data transmission of the first terminal device; or if the DCI is scrambled by the second identifier, the DCI is used to indicate to assist in forwarding the data of the second terminal device.

Scrambling information carried in the DCI is used to indicate whether transmission scheduled by using the DCI is used for data transmission of the terminal device or cooperatively forwarding data of another terminal device, and the DCI does not need to carry additional information, so that resource overheads are reduced.

With reference to the first aspect, the second aspect, or the third aspect, or any one of the implementations of the first aspect, the second aspect, or the third aspect, in still another implementation, if the DCI is scrambled by the second identifier, the DCI includes third indication information, where the third indication information is used to indicate an identifier of the second terminal device.

When the DCI is used to indicate to cooperatively forward data of another terminal device, indication information carried in the DCI is used to indicate an identifier of the another terminal device, and no signaling indication is required, thereby reducing signaling overheads.

With reference to the first aspect, the second aspect, or the third aspect, or any one of the implementations of the first aspect, the second aspect, or the third aspect, in still another implementation, the terminal device stores a correspondence between the second identifier and an identifier of the second terminal device; and if the DCI is scrambled by the second identifier, the second identifier is used to indicate the identifier of the second terminal device.

When the DCI is used to indicate to cooperatively forward data of another terminal device, scrambling information of the DCI is used to indicate an identifier of the another terminal device, and the DCI does not need to carry additional information, so that resource overheads are reduced.

According to a fourth aspect, a data transmission apparatus is provided, and the apparatus can implement the communication method according to any one of the first aspect or the implementations. For example, the data transmission apparatus may be a chip (such as a baseband chip or a communication chip). The foregoing method may be implemented by using software or hardware, or by hardware executing corresponding software.

In a possible implementation, a structure of the data transmission apparatus includes a processor and a memory; and the processor is configured to support the apparatus in performing a corresponding function in the foregoing communication method. The memory is configured to be coupled to the processor, and stores a program (an instruction) necessary for the apparatus and/or data necessary for the apparatus. Optionally, the data transmission apparatus may further include a communication interface, configured to support communication between the apparatus and another network element.

In another possible implementation, the data transmission apparatus may include a unit and a module that perform a corresponding function or action in the foregoing method.

In still another possible implementation, a processor and a transceiver apparatus are included. The processor is coupled to the transceiver apparatus. The processor is configured to execute a computer program or instructions, to control the transceiver apparatus to receive and send information. When the processor executes the computer program or the instructions, the processor is further configured to implement the foregoing method. For example, the transceiver apparatus may be a transceiver, a transceiver circuit, or an input/output interface. When the data transmission apparatus is a chip, the transceiver apparatus is a transceiver circuit or an input/output interface.

When the data transmission apparatus is a chip, a sending unit may be an output unit, for example, an output circuit or a communication interface; and a receiving unit may be an input unit, for example, an input circuit or a communication interface. When the data transmission apparatus is a hardware apparatus, a sending unit may be a transmitter or a transmitter machine, and a receiving unit may be a receiver or a receiver machine.

According to a fifth aspect, a data transmission apparatus is provided, and can implement the communication method according to any one of the second aspect, the third aspect, or the implementations. For example, the data transmission apparatus may be a chip (for example, a baseband chip or a communication chip), and may implement the foregoing method by using software or hardware, or by hardware executing corresponding software.

In a possible implementation, a structure of the data transmission apparatus includes a processor and a memory; and the processor is configured to support the apparatus in performing a corresponding function in the foregoing communication method. The memory is configured to be coupled to the processor, and stores a program (an instruction) necessary for the apparatus and data necessary for the apparatus. Optionally, the data transmission apparatus may further include a communication interface, configured to support communication between the apparatus and another network element.

In another possible implementation, the data transmission apparatus may include a unit and a module that perform a corresponding action in the foregoing method.

In still another possible implementation, a processor and a transceiver apparatus are included. The processor is coupled to the transceiver apparatus. The processor is configured to execute a computer program or instructions, to control the transceiver apparatus to receive and send information. When the processor executes the computer program or the instructions, the processor is further configured to implement the foregoing method. For example, the transceiver apparatus may be a transceiver, a transceiver circuit, or an input/output interface. When the data transmission apparatus is a chip, the transceiver apparatus is a transceiver circuit or an input/output interface.

When the data transmission apparatus is a chip, a receiving unit may be an input unit, for example, an input circuit or a communication interface; and a sending unit may be an output unit, for example, an output circuit or a communication interface. When the data transmission apparatus is a hardware apparatus, a receiving unit may be a receiver (which may also be referred to as a receiver machine); and a sending unit may be a transmitter (which may also be referred to as a transmitter machine).

It may be understood that, in this embodiment of this application, hardware parts responsible for input and output in the data transmission apparatus may be integrated together.

According to a sixth aspect, a computer-readable storage medium is provided. The computer-readable storage medium stores instructions; and when the instructions are run on a computer, the computer is enabled to perform the methods according to the foregoing aspects.

According to a seventh aspect, a computer program product that includes instructions is provided. When the computer program product is executed on a computer, the computer is enabled to perform the methods in the foregoing aspects.

According to an eighth aspect, a communication system is provided, including any one of the foregoing data transmission apparatuses.

### BRIEF DESCRIPTION OF DRAWINGS

FIG. 1 is a schematic diagram of a communication system according to this application;
FIG. 2 is a schematic diagram of an architecture of uplink user cooperation according to this application;
FIG. 3 is a schematic diagram of an architecture of downlink user cooperation according to this application;
FIG. 4 is a schematic diagram of a process of scrambling a CRC bit of DCI by using a C-RNTI according to this application;
FIG. 5 is a schematic flowchart of existing uplink user cooperation according to this application;
FIG. 6 is a schematic flowchart of existing downlink user cooperation according to this application;
FIG. 7 is a schematic flowchart of a data transmission method according to this application;
FIG. 8 is another schematic flowchart of a data transmission method according to this application;
FIG. 9 is a schematic scheduling flowchart of uplink user cooperation according to this application;
FIG. 10 is a schematic scheduling flowchart of downlink user cooperation according to this application;
FIG. 11 is a schematic diagram of a structure of a data transmission apparatus according to this application;
FIG. 12 is another schematic diagram of a structure of a data transmission apparatus according to this application;
FIG. 13 is another schematic diagram of a structure of a data transmission apparatus according to this application;
FIG. 14 is a simplified schematic diagram of a structure of a terminal device according to an embodiment of this application; and
FIG. 15 is a simplified schematic diagram of a structure of a network device according to an embodiment of this application.

### DESCRIPTION OF EMBODIMENTS

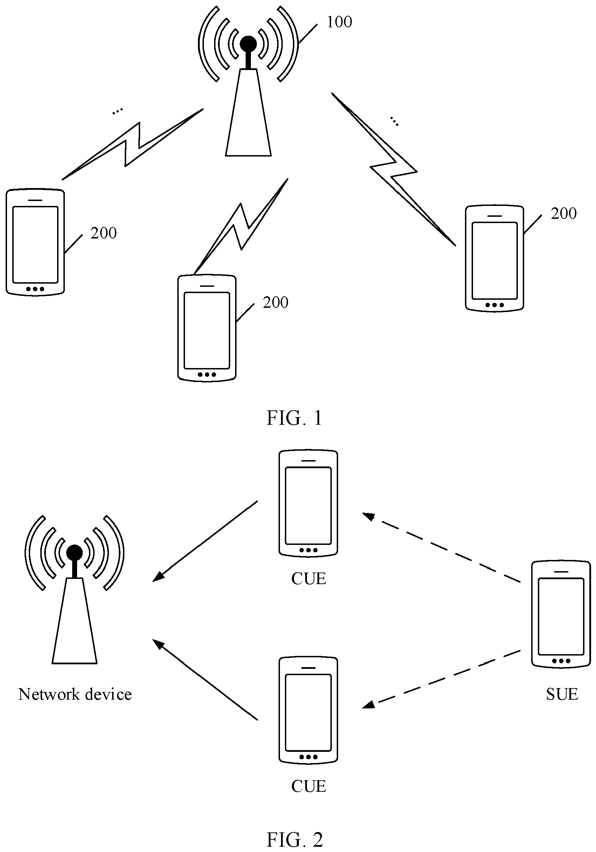

FIG. 1 is a schematic diagram of a communication system according to this application. The communication system may include at least one network device 100 (only one is shown) and one or more terminal devices 200 connected to the network device 100.

The network device 100 may be a device that can communicate with the terminal device 200. The network device 100 may be any device with a wireless sending/receiving function. The network device 100 includes but is not limited to a network device NodeB, an evolved network device eNodeB, a network device in a 5G communication system, a network device or a network device in a future communication system, an access node, a wireless relay node, and a wireless backhaul node in a Wi-Fi system, and the like. The network device 100 may alternatively be a radio controller in a cloud radio access network (cloud radio access network, CRAN) scenario. The network device 100 may alternatively be a small cell, a transmission node (transmission reference point, TRP), or the like. A specific technology and a specific device form that are used by the network device are not limited in embodiments of this application.

The terminal device 200 is a device having a wireless transceiver function. The device may be a device deployed on land, including an indoor or outdoor device, or a hand-held, wearable, or vehicle-mounted device; may be deployed on a water surface, for example, on a ship; or may be deployed in air, for example, on an aircraft, a balloon, and a satellite. The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device may also be referred to as user equipment (user equipment, UE), an access terminal device, a terminal device unit, a mobile station, a mobile console, a remote station, a remote terminal device, a mobile device, a terminal (terminal), a wireless communication device, a terminal device agent, a terminal device apparatus, or the like.

It should be noted that the terms "system" and "network" may be used interchangeably in embodiments of this application. "A plurality of' means two or more. In view of this, "a plurality of' may also be understood as "at least two" in embodiments of this application. "And/or" describes an association relationship between associated objects and indicates that three relationships may exist. For example, A and/or B may indicate the following three cases: Only A exists, both A and B exist, and only B exists.

Uplink user cooperation (which is, for example, shown in FIG. 2)

In user communication cooperation, source UE (source UE, SUE) and cooperative UE (cooperation UE, CUE) form a communication cooperation group. The UE may be SUE in a user cooperation group that is centered on the UE, and CUE in the user cooperation group helps the SUE send uplink data; or may be CUE in another user cooperation group, and the CUE helps the SUE in the user cooperation group send the uplink data. One communication cooperation group corresponds to one unique identifier configured by a network device, for example, a UE cooperation cell radio network temporary identifier (UE cooperation cell radio network temporary identifier UC-RNTI). In a same cell, a plurality of different user cooperation groups may exist.

A process of uplink transmission based on user cooperation mainly includes two phases. In a first phase, the SUE sends data to a plurality of related CUEs by using a physical sidelink shared channel (physical sidelink share channel, PSSCH). In a second phase, the plurality of CUEs simultaneously send data to the network device by using a physical uplink shared channel (physical uplink shared channel, PUSCH). The sent data is the data received by the CUE in the first phase (where there may be different forwarding manners, such as amply-and-forward, decode-and-forward, and compress-and-forward). It can be learned that the plurality of CUEs send data of a same SUE to the network device together, and this improves an uplink transmission capability of the SUE, and therefore improves an uplink transmission rate of the SUE.

User relay is a special case of the user cooperation, that is, the SUE transmits the uplink data by using only one CUE.

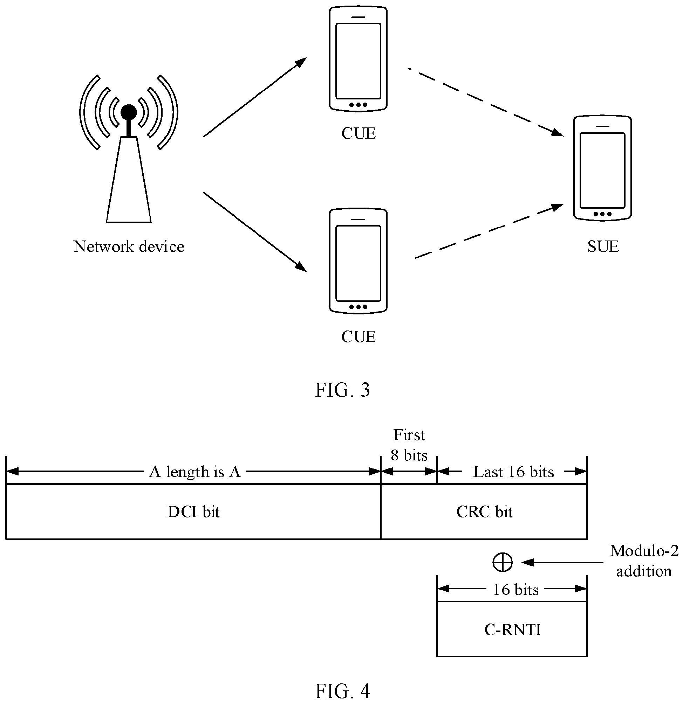

Downlink user cooperation (which is, for example, shown in FIG. 3)

A process of downlink transmission based on the user cooperation mainly includes two phases. In a first phase, a network device sends data to a plurality of related CUEs in a multicast or broadcast manner by using a physical downlink shared channel (physical downlink shared channel, PDSCH). In a second phase, the plurality of CUEs simultaneously send data to target UE (target UE, TUE) by using a PSSCH. The sent data is the data received by the CUE in the first phase (where there may be different forwarding manners, such as amply-and-forward, decode-and-forward, and compress-and-forward). It can be learned that the plurality of CUEs send downlink data to the TUE together, and this improves a downlink transmission capability of the network device, and therefore improves a downlink transmission rate of the network device.

In new radio (new radio, NR), a downlink transmission area (control resource set, CORESET) is used to transmit a physical downlink control channel (physical downlink control channel, PDCCH), and defines a time-frequency resource used by the network device to transmit the PDCCH. The PDCCH carries downlink control information (downlink control information, DCI). According to different functions, the DCI has different formats and may be scrambled by different identifiers, to indicate that configuration information included in the DCI is used for different purposes.

For example, DCI format 0 is used to configure PUSCH transmission, and includes an information bit used to distinguish whether the DCI is used for a PDSCH or a PUSCH, a time-frequency resource used for the PUSCH transmission, a modulation and coding scheme (modulation and coding scheme, MCS), hybrid automatic repeat request (hybrid automatic repeat request, HARQ) information, and the like. The DCI format 0 may be scrambled by a cell radio network temporary identifier (cell radio network temporary identifier, C-RNTI). The UE performs blind detection on the PDCCH. If the UE successfully decodes the DCI by using the C-RNTI of the UE, it indicates that target receiving UE of the PDCCH carrying the DCI is the UE.

For another example, DCI format 1 is used to configure a physical sidelink control channel (physical sidelink control channel, PSCCH)/PSSCH transmission, and includes an identity document (identity document, ID) of PSSCH transmission, a target ID of the PSSCH transmission, a time-frequency resource used for PSCCH transmission, a time-frequency resource used to transmit a PSSCH, an MCS used to transmit the PSSCH, a power control configuration used to transmit the PSSCH, and the like. The DCI format 1 may be scrambled by an SL-RNTI. The UE performs blind detection on the PDCCH. If the UE successfully decodes the DCI by using a sidelink cell radio network temporary identifier (sidelink cell radio network temporary identifier, SL-RNTI) of the UE, the target receiving UE of the PDCCH carrying the DCI is the UE.

For another example, DCI format 2 is used to configure PDSCH transmission, and includes an information bit used to distinguish whether the DCI is used for a PDSCH or a PUSCH, a time-frequency resource used for PDSCH transmission, an MCS, HARQ information, and the like. The DCI format 2 may be scrambled by the C-RNTI. A terminal device performs blind detection on the PDCCH. If the UE successfully decodes the DCI by using the C-RNTI of the UE, it indicates that target receiving UE of the PDCCH carrying the DCI is the UE.

A control channel is mainly used to indicate information related to scheduled data transmission, such as a time-frequency resource occupied for data transmission, an MCS, and an identifier of a receive end. A PDCCH in NR is used as an example, and the PDCCH is used to carry the DCI. The DCI includes related information of scheduled downlink transmission, and the terminal device receives the downlink transmission based on the related information. In addition, the network device may add a cyclic redundancy check (cyclic redundancy check, CRC) bit after a bit in the DCI (how to generate a CRC bit is a current technology, and details are not described herein). When receiving the PDCCH, the UE may determine, based on a CRC bit obtained through decoding, whether corresponding DCI is correctly decoded. Specifically, it is assumed that a quantity of bits included in the DCI is A, and is denoted as ao, a₁, ..., a_{A-1}. The network device generates, based on the bits included in the DCI, a CRC bit whose length is L, and the CRC bit is denoted as po, p₁, ..., p_{L-1}. After the DCI and the CRC are concatenated, bo, b₁, ..., b_{K-1} is obtained, where bₖ=aₖ, k=0, 1, ..., A-1, bₖ=p_{k-A}, k=A, 1+1, ..., A+L-1, and K=A+L. In an NR system, L=24, that is, the length of the CRC bit is 24.

Further, the network device may scramble the CRC bit by using a C-RNT of receiving UE, where a length of the C-RNTI is 16 bits, and the C-RNTI is denoted as x₀, x₁, ..., x₁₅. The scrambled bits are denoted as c₀, c₁, ..., c_{K-1}. Therefore, a relationship between cₖ and bk is cₖ=bₖ, k=0, 1, ..., A+7, and cₖ=(bₖ+x_{k-A-8}), k=A+8, A+9, ... , A+23. It can be seen that, the scrambling operation is to perform modulo-2 addition on the values of the 16 bits of the C-RNTI and corresponding bits of last 16 bits in the CRC bits, as shown in FIG. 4. The C-RNTI of the UE is implicitly carried by scrambling the CRC bits of the DCI by using the C-RNTI of the UE.

After receiving the PDCCH and obtaining the DCI and corresponding CRC bits through decoding, the UE may know, by descrambling the CRC bits, whether the target receiving UE of the PDCCH is the UE. If the target receiving UE of the PDCCH is the UE, the UE further receives a corresponding PDSCH (that is, a data channel) based on the indication information of the DCI; or if the target receiving UE of the PDCCH is not the UE, the UE stops receiving the PDSCH scheduled by the PDCCH.

In NR, the UE can send data to another UE on a PSSCH. For PSSCH transmission, for example, UE 1 needs to send data to UE 2, and a network device sends a PDCCH to the UE 1. The PDCCH is scrambled by an SL-RNTI. This represents that DCI carried by the PDCCH is used to indicate configuration information of sidelink transmission of the UE 1. The DCI carried in the PDCCH includes a target user ID (that is, an ID of the UE 2, configured by a higher layer) of sidelink transmission, a source user ID (that is, an ID of the UE 1, configured by the higher layer) of sidelink transmission, and a PSSCH transmission configuration (including a time-frequency resource, an MCS, and the like). When receiving the PDCCH, the UE 1 transmits a PSCCH and a PSSCH, where the PSCCH is scrambled by a target user ID and carries a time-frequency resource of the PSSCH transmission. Therefore, when the UE 2 performs blind detection on the PSCCH and successfully decodes the PSCCH by using the ID of the UE 2, the UE 2 learns of a time-frequency resource used for the PSSCH transmission, and decodes the PSSCH transmitted on the corresponding time-frequency resource.

Alternatively, a grant-free transmission mode may be used on a sidelink. In other words, the network device allocates some periodic grant-free transmission resources to the UE 1. When the UE 1 needs to transmit data to the UE 2, the UE 1 sends the data to the UE 2 on the grant-free transmission resource by using the PSSCH.

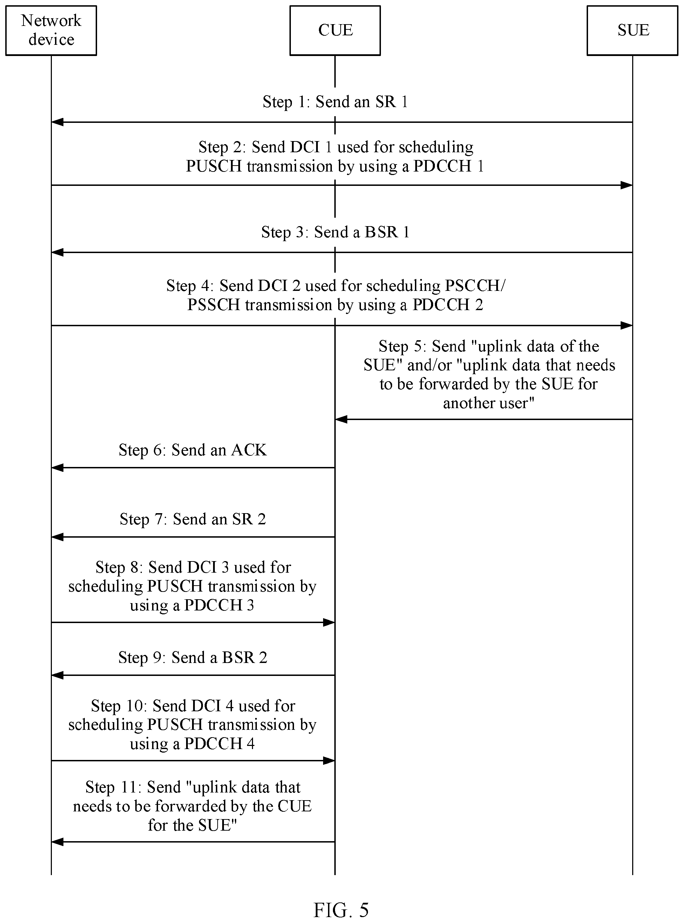

### Existing uplink user cooperation scheduling procedure (which is, for example, shown in FIG. 5)

Step 1: When SUE needs to send first data, the SUE sends an uplink scheduling request (scheduling request, SR) 1 to a network device. The first data is "uplink data of the SUE" or "uplink data that needs to be forwarded by the SUE for another user".
Step 2: After receiving the SR 1 sent by the SUE, the network device sends, to the SUE by using a PDCCH 1, DCI 1 used for scheduling PUSCH transmission, where a PUSCH carries the first data, and a format of the DCI 1 is format 0.
Step 3: After receiving the DCI 1, the SUE sends a buffer status report (buffer state report, BSR) 1 to the network device, where the BSR 1 carries a total data volume of "the uplink data of the SUE" and "the uplink data that needs to be forwarded by the SUE for another user".
Step 4: After receiving the BSR 1, the network device determines, based on a total data volume that needs to be sent by the SUE, a channel status of the SUE, and a channel status of CUE, that the SUE can implement more efficient uplink transmission through forwarding by the CUE, and the network device sends, to the SUE by using a PDCCH 2, DCI 2 used for scheduling PSCCH/PSSCH transmission, where a format of the DCI 2 is format 1.
Step 5: After receiving the DCI 2, the SUE sends, to the CUE, "the uplink data of the SUE" and/or "the uplink data that needs to be forwarded by the SUE for another user".
Step 6: After correctly decoding the data sent by the SUE, the CUE sends an acknowledge character (acknowledge character, ACK) to the network device, or sends the ACK to the SUE, and then the SUE forwards the ACK to the network device, to notify the network device that transmission on a sidelink from the SUE to the CUE succeeds.
Step 7: The CUE sends an SR 2 to the network device.
Step 8: After receiving the SR 2 sent by the CUE, the network device sends, to the CUE by using a PDCCH 3, DCI 3 used for scheduling PUSCH transmission, where a format of the DCI 3 is the format 0.
Step 9: After receiving the DCI 3, the CUE sends a BSR 2 to the network device, where the BSR 2 carries a total data volume of "uplink data of the CUE" and "uplink data that needs to be forwarded by the CUE for another user".
Step 10: After receiving the BSR 2, the network device sends, to the CUE by using a PDCCH 4, DCI 4 used for scheduling PUSCH transmission, where a format of the DCI 4 is the format 1.
Step 11: After receiving the DCI 4, the CUE sends, to the network device, "uplink data that needs to be forwarded by the CUE for the SUE".

In another case, because the network device knows that the CUE has data that needs to be forwarded, after step 6, the network device may directly send, to the CUE by using a PDCCH, DCI used for scheduling PUSCH transmission, so that after receiving the DCI used for scheduling PUSCH transmission, the CUE sends, to the network device, "the uplink data that needs to be forwarded by the CUE for the SUE".

It can be learned that in existing uplink user cooperation transmission, when receiving uplink scheduling performed by the network device, UE cannot distinguish whether uplink data that needs to be transmitted to the network device is of the UE or another user, and if the uplink data that needs to be transmitted to the network device is of the another user, the UE cannot distinguish a user for which the UE needs to forward the uplink data. If there are a plurality of CUEs in the uplink user cooperation group, the network device cannot ensure that the plurality of CUEs are scheduled to simultaneously forward data for a same user.

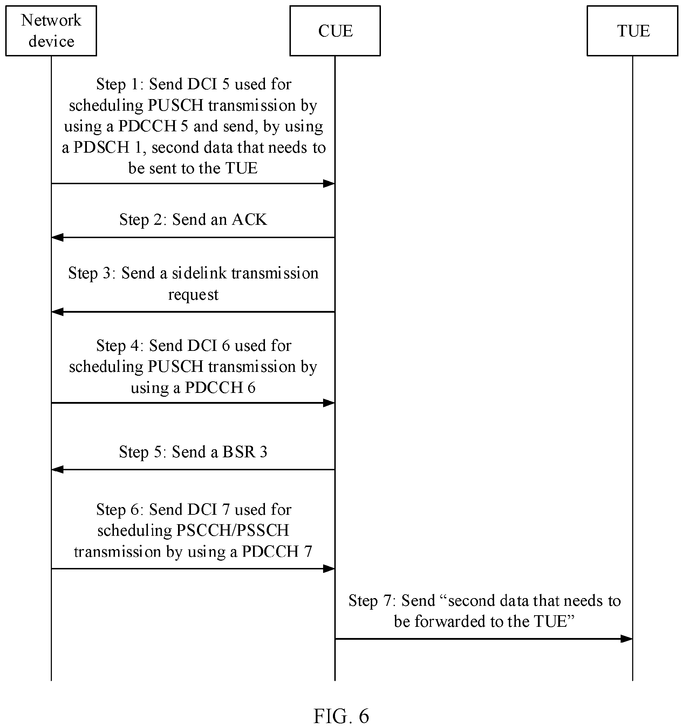

### Existing downlink user cooperation scheduling procedure (which is, for example, shown in FIG. 6)

Step 1: A network device needs to send second data to TUE, and the network device determines, based on a downlink data volume, a channel status of CUE, and a channel status of the TUE, that more efficient downlink transmission can be implemented through forwarding by the CUE. The network device sends, to the CUE by using a PDCCH 5, DCI 5 used for PDSCH transmission, where a format of the DCI 5 is format 2, and sends, to the CUE by using a PDSCH 1, the second data that needs to be sent to the TUE.
Step 2: After correctly decoding the second data sent by the network device, the CUE sends an ACK to the network device.
Step 3: Because the CUE receives data that needs to be forwarded, the CUE sends a sidelink transmission request to the network device.
Step 4: After receiving the sidelink transmission request sent by the CUE, the network device sends, to the CUE by using a PDCCH 6, DCI 6 used for scheduling PUSCH transmission, where a format of the DCI 6 is format 0.
Step 5: After receiving the DCI 6, the CUE sends a BSR 3 to the network device, where the BSR 3 carries a total data volume of "sidelink data of the CUE that needs to be sent to the TUE" and "downlink data that needs to be forwarded to the TUE".
Step 6: After receiving the BSR 3, the network device sends, to the CUE by using a PDCCH 7, DCI 7 used for scheduling PSCCH /PSSCH transmission, where a format of the DCI 7 is format 1.
Step 7: After receiving the DCI 7, the CUE sends, to the TUE, "the second data that needs to be forwarded to the TUE".

It can be learned that in existing downlink user cooperation transmission, when receiving sidelink scheduling performed by the network device, UE cannot distinguish whether sidelink data that needs to be transmitted to a target user on sidelink transmission is of the UE or another user, and if the sidelink data that needs to be transmitted to the target user on the sidelink transmission is of the another user, the UE cannot distinguish a user for which the UE needs to forward the sidelink data. If there are a plurality of CUEs in the downlink user cooperation group, the network device cannot ensure that the plurality of CUEs are scheduled to simultaneously forward data for a same user (or the network device).

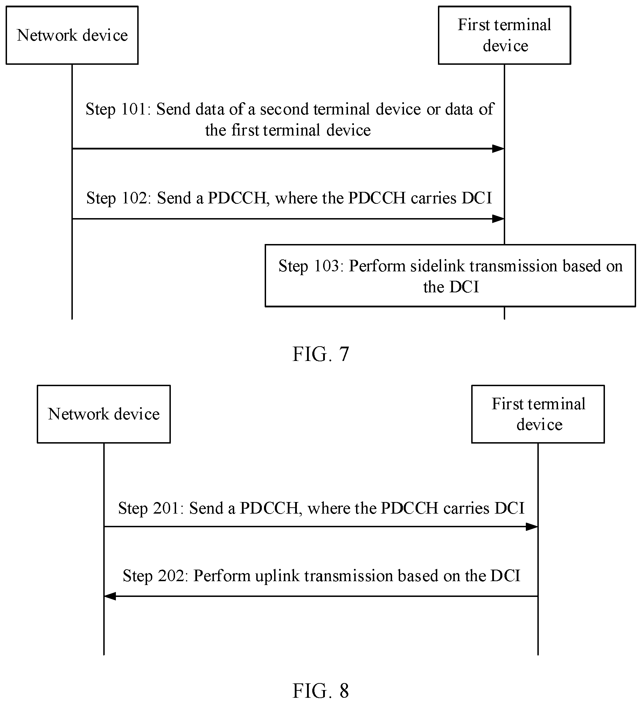

FIG. 7 is a schematic flowchart of a data transmission method according to an embodiment of this application. For example, the method may include the following steps.

Step 101: A network device sends data of a second terminal device or data of a first terminal device to the first terminal device.

Correspondingly, the first terminal device receives the data of the second terminal device or the data of the first terminal device.

Step 102: The network device sends a PDCCH to the first terminal device, DCI carried in the PDCCH is used to schedule sidelink transmission, where the sidelink transmission includes PSCCH/PSSCH transmission, and the DCI is used to indicate data transmission of the first terminal device, or used to indicate the first terminal device to assist in forwarding the data of the second terminal device.

Correspondingly, the first terminal device receives the PDCCH.

Step 103: The first terminal device performs sidelink transmission based on the DCI.

FIG. 8 is a schematic flowchart of a data transmission method according to an embodiment of this application. For example, the method may include the following steps.

Step 201: A network device sends a PDCCH to a first terminal device, DCI carried in the PDCCH is used to schedule uplink transmission, where the uplink transmission includes PUSCH transmission, and the DCI is used to indicate data transmission of the first terminal device, or used to indicate the first terminal device to assist in forwarding data of a second terminal device.

Correspondingly, the first terminal device receives the PDCCH.

Step 202: The first terminal device performs uplink transmission based on the DCI.

Correspondingly, the network device receives data transmitted by the first terminal device.

Optionally, if the DCI is used to indicate the first terminal device to assist in forwarding the data of the second terminal device, the DCI is further used to indicate an identifier of the second terminal device.

According to the data transmission method provided in this embodiment of this application, during user cooperation transmission, the DCI is used to indicate whether transmission scheduled by the network device is used to transmit data of the terminal device or cooperatively forward data of another terminal device. This implements how to distinguish, in user cooperation transmission, whether the transmission scheduled by the network device is used for data transmission between terminal devices or cooperatively forwarding the data of the another terminal device. In addition, when the DCI indicates to cooperatively forward the data of the another terminal device, the DCI is further used to indicate an identifier of the another terminal device, to implement how to distinguish, in user cooperation transmission, a terminal device for which cooperative forwarding needs to be performed.

The following describes in detail how the DCI specifically performs indication.

### Embodiment 1

Uplink user cooperation status:
DCI includes first indication information, where the first indication information is used to indicate uplink data transmission of a first terminal device, or used to indicate the first terminal device to assist in forwarding uplink data of a second terminal device.

Specifically, the first indication information occupies at least one bit, where the at least one bit is used to indicate the uplink data transmission of the first terminal device, or used to indicate the first terminal device to assist in forwarding the uplink data of the second terminal device. For example, it is assumed that the first indication information occupies one bit. If a value of the bit is 0, the uplink data transmission of the first terminal device is indicated. If a value of the bit is 1, the first terminal device assists in forwarding the uplink data of the second terminal device.

Further, if the DCI is used to indicate the first terminal device to assist in forwarding the uplink data of the second terminal device, the DCI further includes second indication information, where the second indication information is used to indicate an identifier of the second terminal device.

Specifically, the second indication information occupies at least one bit, and the at least one bit is used to indicate the identifier of the second terminal device. For example, in multi-hop transmission, UE 6 needs to transmit uplink data to a network device, and the network device schedules the uplink data of the UE 6 to perform user relay transmission separately by using two paths: a path 1: UE 6->UE 2->UE 1->UE 0->network device, and a path 2: UE 6->UE 5->UE 4->UE 3-> network device. When both the UE 0 and the UE 3 correctly receive uplink data of the UE 6 that needs to be forwarded, the network device needs to separately send DCI to the UE 0 and the UE 3 by using an independent PDCCH. A format of the DCI is DCI format 0. In this case, a value of a bit occupied by second indication information in the two pieces of DCI is an ID of the UE 6 (where the ID of the UE 6 is configured by using higher layer signaling). If the DCI indicates that a scheduled PUSCH is used to transmit uplink data of the DCI, values of bits occupied by the second indication information are default values (for example, a second bit is eight bits, and default values include, for example, 00000000 or 11111111).

The second indication information may be located in last several bits of the DCI. In this case, the bits occupied by the second indication information are padding bits.

Bits occupied by the first indication information and the second indication information do not overlap.

The first indication information and the second indication information may occupy a same indicator (for example, one indicator includes nine bits, a 1^{st} bit is occupied by the first indication information, and last eight bits are occupied by the second indication information), or may occupy different indicators.

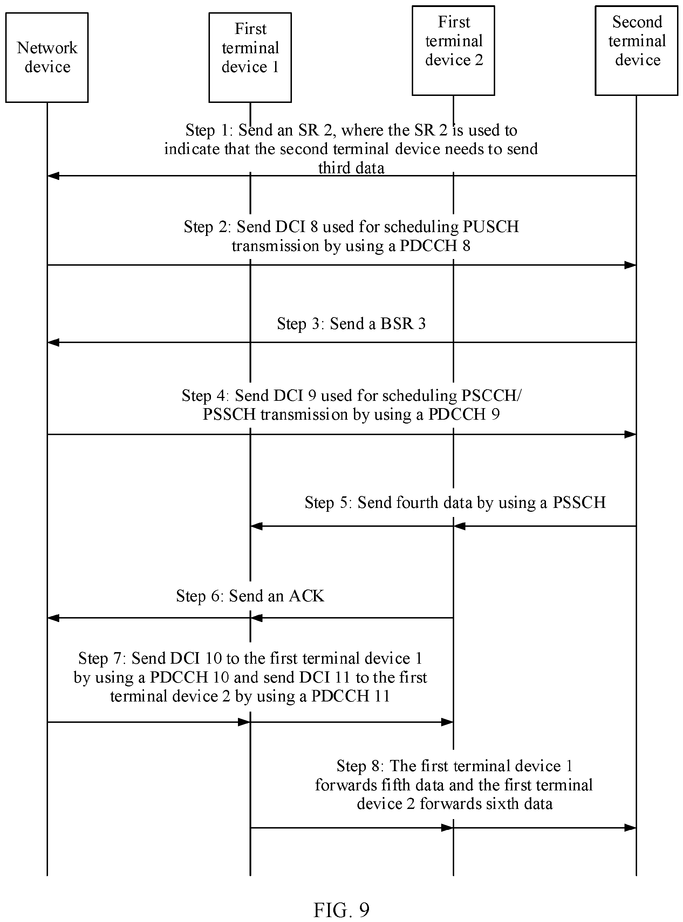

Using the uplink user cooperation status in Embodiment 1 as an example, an uplink user cooperation scheduling procedure (which is, for example, shown in FIG. 9) includes the following steps.

Step 1: When the second terminal device needs to send third data, the second terminal device sends an SR to the network device, where the SR 2 is used to indicate that the second terminal device needs to send the third data, and the third data is uplink data of the second terminal device, that is, data that the second terminal device needs to send to the network device.

Step 2: After receiving the SR 2, the network device sends, to the second terminal device by using a PDCCH 8, DCI 8 used for scheduling PUSCH transmission. A format of the DCI 8 is the format 0, DCI 1 is scrambled by a C-RNTI of the second terminal device, the DCI 8 includes first indication information, and the first indication information is used to indicate that PUSCH transmission scheduled by using the DCI 8 is used to transmit the uplink data of the second terminal device.

Step 3: The second terminal device decodes, by using the C-RNTI of the second terminal device, the DCI 8 carried in the PDCCH 8, and after correctly performing decoding, the second terminal device sends a BSR 3 to the network device, where the BSR 3 carries a data volume of the third data.

Step 4: After receiving the BSR 3, the network device determines, based on a data volume that needs to be sent by SUE, a channel status of the SUE, and channel statuses of a first terminal device 1 and a first terminal device 2, that the second terminal device can implement more efficient uplink transmission through forwarding by the first terminal device 1 and the first terminal device 2, and the network device sends, to the second terminal device by using a PDCCH 9, DCI 9 used for scheduling PSCCH/PSSCH transmission, where a format of the DCI 9 is format 1, and the DCI 9 is scrambled by an SL-RNTI of the second terminal device. The PSSCH transmission is used to send the third data, where the third data is data that needs to be sent by the second terminal device to the network device. The DCI 9 includes a source ID (that is, an ID of the second terminal device, configured by a higher layer) of the PSSCH transmission, a target ID (that is, a group ID of the first terminal device 1 and the first terminal device 2, configured by a higher layer) of the PSSCH transmission, a time-frequency resource used for the PSCCH transmission, a time-frequency resource used for the PSSCH transmission, an MCS used for the PSSCH transmission, a power control configuration used for the PSSCH transmission, and the like.

Step 5: The second terminal device decodes, by using the SL-RNTI of the second terminal device, the DCI 9 carried in the PDCCH 2, and after correctly performing decoding, the second terminal device encodes and modulates the third data to obtain fourth data, and sends the fourth data to the first terminal device 1 and the first terminal device 2 by using a PSSCH.

Step 6: After correctly decoding the fourth data sent by the second terminal device, the first terminal device 1 and the first terminal device 2 obtain the third data, and the first terminal device 1 and the first terminal device 2 send ACKs to the network device, or the first terminal device 1 and the first terminal device 2 send ACKs to the second terminal device and then the second terminal device forwards the ACKs to the network device, to notify the network device that sidelink transmission from the second terminal device to the first terminal device 1 and the first terminal device 2 succeeds.

Step 7: Because the network device knows that the first terminal device 1 and the first terminal device 2 have data that needs to be forwarded, the network device sends, to the first terminal device 1 by using a PDCCH 10, DCI 10 used for scheduling PUSCH transmission, where the DCI 10 is scrambled by the SL-RNTI of the first terminal device 1; and the network device sends, to the first terminal device 2 by using a PDCCH 11, DCI 11 used for scheduling PUSCH transmission, where the DCI 11 is scrambled by the SL-RNTI of the first terminal device 2.

First indication information included in the DCI 10 is used to indicate that the PUSCH transmission scheduled by using the DCI 10 is used to assist in forwarding the uplink data of the second terminal device, and second indication information included in the DCI 10 is used to indicate the identifier of the second terminal device.

First indication information included in the DCI 11 is used to indicate that the PUSCH transmission scheduled by using the DCI 11 is used to assist in forwarding the uplink data of the second terminal device, and second indication information included in the DCI 11 is used to indicate the identifier of the second terminal device.

Step 8: The first terminal device 1 decodes, by using the SL-RNTI of the first terminal device 1, the DCI 10 carried in the PDCCH 3, and after correctly performing decoding, the first terminal device 1 encodes and modulates the third data based on transmission configuration information included in the DCI 10, to obtain fifth data, and forwards the fifth data to the network device. The first terminal device 2 decodes, by using the SL-RNTI of the first terminal device 2, the DCI 11 carried in the PDCCH 11, and after correctly performing decoding, the first terminal device 2 encodes and modulates the third data based on transmission configuration information included in the DCI 11, to obtain sixth data, and forwards the sixth data to the network device.

The network device simultaneously receives the fifth data sent by the first terminal device 1 and the sixth data sent by the first terminal device 2, and performs combining and decoding to obtain the third data.

Downlink user cooperation status:
The DCI includes first indication information, where the first indication information is used to indicate sidelink data transmission of the first terminal device, or used to indicate the first terminal device to assist in forwarding sidelink data of the second terminal device.

Specifically, the first indication information occupies at least one bit, where the at least one bit is used to indicate the sidelink data transmission of the first terminal device, or used to indicate the first terminal device to assist in forwarding the sidelink data of the second terminal device. For example, it is assumed that the first indication information occupies one bit. If a value of the bit is 0, the sidelink data transmission of the first terminal device is indicated. If a value of the bit is 1, the first terminal device assists in forwarding the sidelink data of the second terminal device.

Further, if the DCI is used to indicate the first terminal device to assist in forwarding the sidelink data of the second terminal device, the DCI further includes second indication information, where the second indication information is used to indicate an identifier of the second terminal device.

Specifically, the second indication information occupies at least one bit, and the at least one bit is used to indicate the identifier of the second terminal device. For example, in multi-hop transmission, the network device needs to transmit downlink data to UE 6, and the network device transmits the downlink data to the UE 6 separately by using the following two paths to perform user relay transmission: network device->UE 0->UE 1->UE 2->UE 6 and network device->UE 3->UE 4->UE 5->UE 6. When both the UE 2 and the UE 5 correctly receive sidelink data that needs to be forwarded to the UE 6, the network device needs to separately send DCI to the UE 2 and the UE 5 by using an independent PDCCH. A format of the DCI is DCI format 0. In this case, a value of a bit occupied by a second indicator in the two pieces of DCI is the ID of the UE 6 (where the ID of the UE 6 is configured by using higher layer signaling). If the DCI indicates that the scheduled PSCCH/PSSCH is used to transmit sidelink data of the DCI, values of the bits occupied by the second indication information are default values (for example, a second bit is eight bits, and default values include, for example, 00000000 or 11111111).

The second indication information may be located in last several bits of the DCI. In this case, the bits occupied by the second indication information are padding bits.

Bits occupied by the first indication information and the second indication information do not overlap.

The first indication information and the second indication information may occupy a same indicator (for example, one indicator includes nine bits, a 1^{st} bit is occupied by the first indication information, and last eight bits are occupied by the second indication information), or may occupy different indicators.

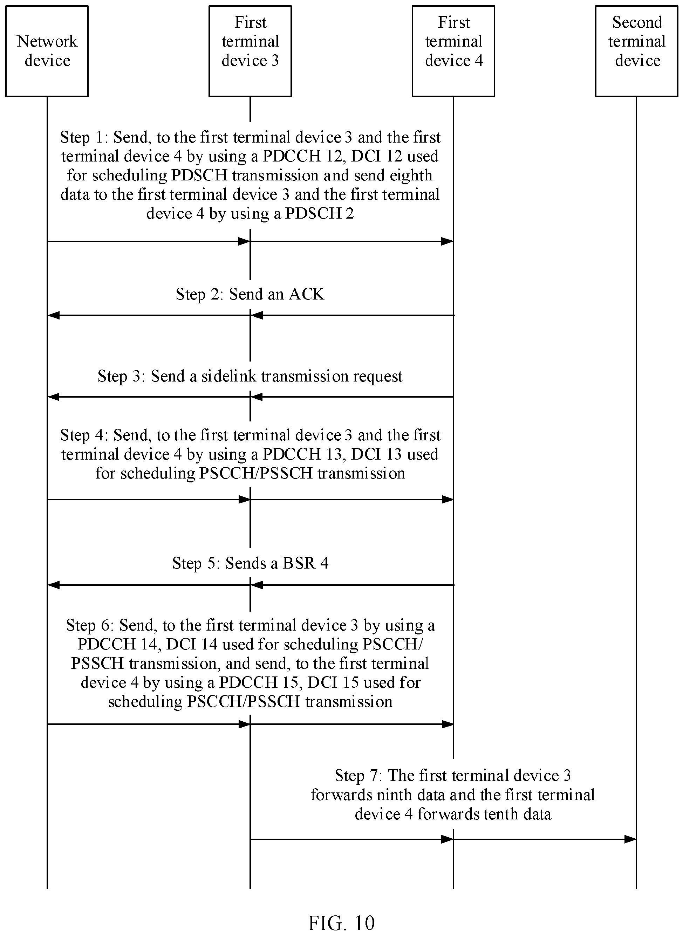

Using the downlink user cooperation status in Embodiment 1 as an example, a downlink user cooperation scheduling procedure (which is, for example, shown in FIG. 10) includes the following steps.
Step 1: When the network device needs to send seventh data (that is, data that the network device needs to send to the second terminal device) to the second terminal device, the network device determines, based on a downlink data volume, a channel status of a first terminal device 3, a channel status of a first terminal device 4, and a channel status of the second terminal device, that relay transmission may be performed by using the first terminal device 3 and the first terminal device 4, to achieve higher transmission efficiency. Therefore, the network device sends, to the first terminal device 3 and the first terminal device 4 by using a PDCCH 12, DCI 12 used for PDSCH transmission, where a format of the DCI 12 is format 2; and sends eighth data to the first terminal device 3 and the first terminal device 4 by using a PDSCH 2, where the eighth data is obtained after encoding and modulation are performed on the seventh data.
Step 2: After correctly decoding the seventh data sent by the network device, the first terminal device 3 and the first terminal device 4 obtain the seventh data, and the first terminal device 3 and the first terminal device 4 send ACKs to the network device.
Step 3: Because the first terminal device 3 and the first terminal device 4 receive sidelink data that needs to be forwarded, the first terminal device 3 and the first terminal device 4 send sidelink transmission requests to the network device.
Step 4: After receiving the sidelink transmission requests sent by the first terminal device 3 and the first terminal device 4, the network device sends, to the first terminal device 3 and the first terminal device 4 by using a PDCCH 13, DCI 13 used for scheduling PSCCH/PSSCH transmission, where a format of the DCI 13 is the format 0.
Step 5: After receiving the DCI 13, the first terminal device 3 and the first terminal device 4 send a BSR 4 to the network device, where the BSR 4 carries a total data volume of sidelink data that needs to be sent by the first terminal device to the second terminal device and downlink data that needs to be forwarded to the second terminal device.
Step 6: After receiving the BSR 4 sent by the first terminal device 3 and the first terminal device 4, the network device sends, to the first terminal device 3 by using a PDCCH 14, DCI 14 used for scheduling PSCCH/PSSCH transmission, and the network device sends, to the first terminal device 4 by using a PDCCH 15, DCI 15 used for scheduling PSCCH/PSSCH transmission.

A format of the DCI 14 is the format 1, and the DCI 14 is scrambled by an SL-RNTI of the first terminal device 3. First indication information included in the DCI 14 is used to indicate that the PSCCH/PSSCH transmission scheduled by the DCI 14 is used to assist in forwarding the sidelink data of the second terminal device, and second indication information included in the DCI 14 is used to indicate the identifier of the second terminal device. The DCI 14 further includes a source ID of the PSCCH/PSSCH transmission (that is, an identifier of the network device or an identifier of another user, which is configured by a higher layer), and the DCI 14 further includes a time-frequency resource of user PSCCH transmission, a time-frequency resource used to transmit the PSSCH, an MCS for transmitting the PSSCH, a power control configuration for transmitting the PSSCH.

The DCI 14 is similar to the DCI 15. For details, refer to an explanation of the DCI 14. Details are not described herein again.

Step 7: The first terminal device 3 decodes, by using the SL-RNTI of the first terminal device 3, the DCI 14 carried in the PDCCH 14, and after correctly performing decoding, the first terminal device 3 encodes and modulates the seventh data based on transmission configuration information included in the DCI 14, to obtain ninth data, and forwards the ninth data to the second terminal device. The first terminal device 4 decodes, by using the SL-RNTI of the first terminal device 4, the DCI 15 carried in the PDCCH 15, and after correctly performing decoding, the first terminal device 4 encodes and modulates the seventh data based on transmission configuration information included in the DCI 15, to obtain tenth data, and forwards the tenth data to the second terminal device.

The network device simultaneously receives the ninth data sent by the first terminal device 3 and the tenth data sent by the first terminal device 4, and performs combining and decoding to obtain the seventh data.

It should be noted that the embodiments shown in FIG. 9 and FIG. 10 are described by using an example based on a case in which there are two first terminal devices, and a quantity of first terminal devices may alternatively be 1, 3, or another value.

There may be one or more first terminal devices.

In this embodiment, indication information carried in the DCI is used to indicate whether the transmission scheduled by using the DCI is used to transmit data of the terminal device or is used to cooperatively forward data of another terminal device. In addition, when the DCI is used to indicate to cooperatively forward data of another terminal device, the indication information carried in the DCI is used to indicate the identifier of the another terminal device, no signaling indication is required, thereby reducing signaling overheads.

### Embodiment 2

Uplink user cooperation status:
A first terminal device stores a first identifier and a second identifier of the first terminal device; and if DCI is scrambled by the first identifier, the DCI is used to indicate uplink data transmission of the first terminal device; or if the DCI is scrambled by the second identifier, the DCI is used to indicate to assist in forwarding uplink data of the second terminal device.

Downlink user cooperation status:
The first terminal device stores a first identifier and a second identifier of the first terminal device; and if the DCI is scrambled by the first identifier, the DCI is used to indicate sidelink data transmission of the first terminal device; or if the DCI is scrambled by the second identifier, the DCI is used to indicate to assist in forwarding sidelink data of the second terminal device.

The first identifier and the second identifier are configured by a network device by using higher layer signaling, or the first identifier and the second identifier are specified in a protocol.

For example, it is assumed that the first identifier is a C-RNTI, and the second identifier is a relay radio network temporary identifier (relay radio network temporary identifier, R-RNTI). If the DCI is scrambled by the C-RNTI, the uplink data transmission of the first terminal device is indicated; or if the DCI is scrambled by the R-RNTI, the DCI is used to indicate to assist in forwarding the uplink data of the second terminal device. For another example, it is assumed that the first identifier is a C-RNTI, and the second identifier is an R-RNTI. If the DCI is scrambled by the C-RNTI, the sidelink data transmission of the first terminal device is indicated; or if the DCI is scrambled by the R-RNTI, the DCI is used to indicate to assist in forwarding the sidelink data of the second terminal device.

Further, if the DCI is scrambled by the second identifier, the DCI includes third indication information, where the third indication information is used to indicate an identifier of the second terminal device.

It should be noted that an indication manner of the third indication information is the same as that of second indication information. For details, refer to an explanation of the indication manner of the second indication information. Details are not described herein again.

In this embodiment, scrambling information carried in the DCI is used to indicate whether transmission scheduled by using the DCI is used for data transmission of the terminal device or cooperatively forwarding data of another terminal device, and the DCI does not need to carry additional information, so that resource overheads are reduced. In addition, when the DCI is used to indicate to cooperatively forward data of another terminal device, indication information carried in the DCI is used to indicate an identifier of the another terminal device, and no signaling indication is required, thereby reducing signaling overheads.

It should be noted that an uplink user cooperation scheduling procedure in which Embodiment 2 is used as an example is similar to the uplink user cooperation scheduling procedure in which Embodiment 1 is used as an example, and only indication information included in the DCI and scrambling information of the DCI are different. Details are not described herein again. It should be noted that a downlink user cooperation scheduling procedure in which Embodiment 2 is used as an example is similar to the downlink user cooperation scheduling procedure in which Embodiment 1 is used as an example, and only indication information included in the DCI and scrambling information of the DCI are different. Details are not described herein again.

### Embodiment 3

Uplink user cooperation status:
A first terminal device stores a first identifier and a plurality of second identifiers of the first terminal device; and if DCI is scrambled by the first identifier, the DCI is used to indicate uplink data transmission of the first terminal device; or if the DCI is scrambled by the second identifier, the DCI is used to indicate to assist in forwarding uplink data of the second terminal device.

Downlink user cooperation status:
The first terminal device stores a first identifier and a plurality of second identifiers of the first terminal device; and if the DCI is scrambled by the first identifier, the DCI is used to indicate sidelink data transmission of the first terminal device; or if the DCI is scrambled by the second identifier, the DCI is used to indicate to assist in forwarding sidelink data of the second terminal device.

The first identifier and the plurality of second identifiers are configured by a network device by using higher layer signaling.

For example, it is assumed that the first identifier is a C-RNTI, and the second identifier is an R-RNTI. If the DCI is scrambled by the C-RNTI, the uplink data transmission of the first terminal device is indicated; or if the DCI is scrambled by the R-RNTI, the DCI is used to indicate to assist in forwarding the uplink data of the second terminal device. For another example, it is assumed that the first identifier is a C-RNTI, and the second identifier is an R-RNTI. If the DCI is scrambled by the C-RNTI, the sidelink data transmission of the first terminal device is indicated; or if the DCI is scrambled by the R-RNTI, the DCI is used to indicate to assist in forwarding the sidelink data of the second terminal device.

Further, the terminal device stores a correspondence between the second identifier and an identifier of the second terminal device; and if the DCI is scrambled by the second identifier, the second identifier is used to indicate the identifier of the second terminal device.

The correspondence between the second identifier and the identifier of the second terminal device is configured by the network device by using higher layer signaling. For example, if the network device notifies in advance the first terminal device that the first terminal device may forward uplink data for UE 0, UE 1, UE 2, and UE 3, the network device configures the following correspondences for the first terminal device by using the higher layer signaling: (ID 0, R-RNTI 0), (ID 1, R-RNTI 1), (ID 2, R-RNTI 2), and (ID 3, R-RNTI 3), where ID 0/ID 1/ID 2/ID 3 are identifiers of the UE 0/the UE 1/the UE 2/the UE 3 in user relay transmission respectively, and R-RNTI 0/ R-RNTI 1/ R-RNTI 2/ R-RNTI 3 are radio temporary identifiers of the UE 0/the UE 1/the UE 2/the UE 3 in user relay transmission respectively, and they are used by the terminal device to determine a specific user that is in the UE 0/the UE 1/the UE 2/the UE 3 and for which data forwarding needs to be performed. When the network device schedules the first terminal device to forward uplink data for the UE 2, the DCI sent by the network device is scrambled by the R-RNTI 2. When the first terminal device receives a PDCCH, if the first terminal device successfully decodes, by using the R-RNTI 2, the DCI carried on the PDCCH, it indicates that a PUSCH scheduled by using the DCI carried on the PDCCH is used to forward the uplink data for the UE 2.

In this embodiment, scrambling information carried in the DCI is used to indicate whether the transmission scheduled by using the DCI is used to transmit data of the terminal device or is used to cooperatively forward data of another terminal device. In addition, when the DCI is used to cooperatively forward data of the another terminal device, the scrambling information carried in the DCI is used to indicate an identifier of the another terminal device, and the DCI does not need to carry additional information, so that resource overheads are reduced.

It should be noted that an uplink user cooperation scheduling procedure in which Embodiment 3 is used as an example is similar to the uplink user cooperation scheduling procedure in which Embodiment 1 is used as an example, and only indication information included in the DCI and scrambling information of the DCI are different. Details are not described herein again. It should be noted that a downlink user cooperation scheduling procedure in which Embodiment 3 is used as an example is similar to the downlink user cooperation scheduling procedure in which Embodiment 1 is used as an example, and only indication information included in the DCI and scrambling information of the DCI are different. Details are not described herein again.

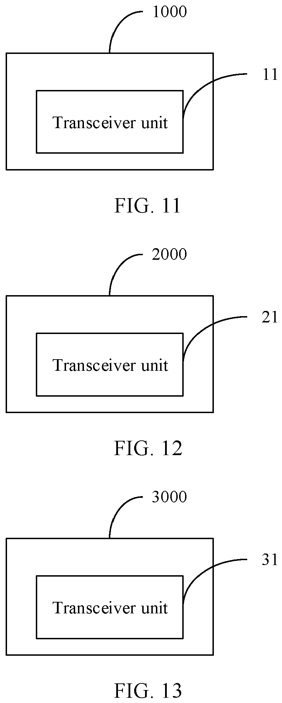

Based on a same concept as the foregoing data transmission method, as shown in FIG. 11, an embodiment of this application further provides a data transmission apparatus 1000. The apparatus 1000 includes a transceiver unit 11. For example,
the transceiver unit 11 is configured to receive DCI from a network device, where the DCI is used to schedule uplink transmission or sidelink transmission, and the DCI is used to indicate data transmission of a first terminal device, or used to indicate the first terminal device to assist in forwarding data of a second terminal device; and
the transceiver unit 11 is further configured to perform uplink transmission or sidelink transmission based on the DCI.

In an implementation, if the DCI is used to indicate the first terminal device to assist in forwarding the data of the second terminal device, the DCI is further used to indicate an identifier of the second terminal device.

In another implementation, the DCI includes first indication information, where the first indication information is used to indicate the data transmission of the first terminal device, or used to indicate the first terminal device to assist in forwarding the data of the second terminal device.

In another implementation, if the DCI is used to indicate the first terminal device to assist in forwarding the data of the second terminal device, the DCI further includes second indication information, where the second indication information is used to indicate an identifier of the second terminal device.

In another implementation, the first terminal device stores a first identifier and at least one second identifier of the first terminal device; and if the DCI is scrambled by the first identifier, the DCI is used to indicate data transmission of the first terminal device; or if the DCI is scrambled by the second identifier, the DCI is used to indicate to assist in forwarding data of the second terminal device.

In another implementation, if the DCI is scrambled by the second identifier, the DCI includes third indication information, where the third indication information is used to indicate the identifier of the second terminal device.

In another implementation, the terminal device stores a correspondence between the second identifier and the identifier of the second terminal device; and
if the DCI is scrambled by the second identifier, the second identifier is used to indicate the identifier of the second terminal device.

For specific descriptions of a function of the transceiver unit 11, refer to related descriptions of the first terminal device in the embodiments shown in FIG. 7 and FIG. 8. Details are not described herein again.

According to the data transmission apparatus provided in this embodiment of this application, during user cooperation, the DCI is used to indicate whether transmission scheduled by the DCI is used to transmit data of the terminal device or cooperatively forward data of another terminal device, to improve accuracy of data transmission.

Based on a same concept as the foregoing data transmission method, as shown in FIG. 12, an embodiment of this application further provides a data transmission apparatus 2000. The apparatus 2000 includes a transceiver unit 21. For example,
the transceiver unit is configured to send data of a second terminal device or data of a first terminal device to the first terminal device, and send DCI to the first terminal device, where the DCI is used to schedule sidelink transmission, and the DCI is used to indicate data transmission of the first terminal device, or used to indicate the first terminal device to assist in forwarding data of the second terminal device.

In an implementation, if the DCI is used to indicate the first terminal device to assist in forwarding the data of the second terminal device, the DCI is further used to indicate an identifier of the second terminal device.

In another implementation, the DCI includes first indication information, where the first indication information is used to indicate the data transmission of the first terminal device, or used to indicate the first terminal device to assist in forwarding the data of the second terminal device.

In another implementation, if the DCI is used to indicate the first terminal device to assist in forwarding the data of the second terminal device, the DCI further includes second indication information, where the second indication information is used to indicate an identifier of the second terminal device.

In another implementation, the first terminal device stores a first identifier and at least one second identifier of the first terminal device; and if the DCI is scrambled by the first identifier, the DCI is used to indicate data transmission of the first terminal device; or if the DCI is scrambled by the second identifier, the DCI is used to indicate to assist in forwarding data of the second terminal device.

In another implementation, if the DCI is scrambled by the second identifier, the DCI includes third indication information, where the third indication information is used to indicate the identifier of the second terminal device.

In another implementation, the terminal device stores a correspondence between the second identifier and the identifier of the second terminal device; and
if the DCI is scrambled by the second identifier, the second identifier is used to indicate the identifier of the second terminal device.

For specific descriptions of a function of the transceiver unit 21, refer to related descriptions of the first terminal device in the embodiments shown in FIG. 7 and FIG. 8. Details are not described herein again.

According to the data transmission apparatus provided in this embodiment of this application, during user cooperation, the DCI is used to indicate whether transmission scheduled by the DCI is used to transmit data of the terminal device or cooperatively forward data of another terminal device, to improve accuracy of data transmission.

Based on a same concept as the foregoing data transmission method, as shown in FIG. 13, an embodiment of this application further provides a data transmission apparatus 3000. The apparatus 3000 includes a transceiver unit 31. For example,
the transceiver unit 31 is configured to send DCI to a first terminal device, where the DCI is used to schedule uplink transmission, and the DCI is used to indicate data transmission of the first terminal device, or used to indicate the first terminal device to assist in forwarding data of a second terminal device; and receive data transmitted by the first terminal device.

In an implementation, if the DCI is used to indicate the first terminal device to assist in forwarding the data of the second terminal device, the DCI is further used to indicate an identifier of the second terminal device.

In another implementation, the DCI includes first indication information, where the first indication information is used to indicate the data transmission of the first terminal device, or used to indicate the first terminal device to assist in forwarding the data of the second terminal device.

In another implementation, if the DCI is used to indicate the first terminal device to assist in forwarding the data of the second terminal device, the DCI further includes second indication information, where the second indication information is used to indicate an identifier of the second terminal device.

In another implementation, the first terminal device stores a first identifier and at least one second identifier of the first terminal device; and if the DCI is scrambled by the first identifier, the DCI is used to indicate data transmission of the first terminal device; or if the DCI is scrambled by the second identifier, the DCI is used to indicate to assist in forwarding data of the second terminal device.

In another implementation, if the DCI is scrambled by the second identifier, the DCI includes third indication information, where the third indication information is used to indicate the identifier of the second terminal device.

In another implementation, the terminal device stores a correspondence between the second identifier and the identifier of the second terminal device; and
if the DCI is scrambled by the second identifier, the second identifier is used to indicate the identifier of the second terminal device.

For specific descriptions of a function of the transceiver unit 31, refer to related descriptions of the first terminal device in the embodiments shown in FIG. 7 and FIG. 8. Details are not described herein again.

According to the data transmission apparatus provided in this embodiment of this application, during user cooperation, the DCI is used to indicate whether transmission scheduled by the DCI is used to transmit data of the terminal device or cooperatively forward data of another terminal device, to improve accuracy of data transmission.

An embodiment of this application further provides a data transmission apparatus. The data transmission apparatus is configured to perform the foregoing data transmission method, and may be the first terminal device/network device in the foregoing method embodiments. A part or all of the foregoing data transmission method may be implemented by using hardware or software.

Optionally, in specific implementation, the data transmission apparatus may be a chip or an integrated circuit.

Optionally, when a part or all of the data transmission method in the foregoing embodiments is implemented by using software, the data transmission apparatus includes: a processor, configured to execute a program, where when the program is executed, the data transmission apparatus is enabled to implement the data transmission method provided in the foregoing embodiments. The data transmission apparatus may alternatively include a memory, configured to store necessary programs. These related programs may be loaded in the memory when the data transmission apparatus is delivered from a factory, or may be loaded into the memory as required later.

Optionally, the memory may be a physically independent unit, or may be integrated with the processor.

Optionally, when a part or all of the data transmission method in the foregoing embodiments is implemented by using software, the data transmission apparatus may alternatively include only a processor. The memory configured to store the program is located outside the data transmission apparatus. The processor is connected to the memory by using a circuit/wire, and is configured to read and execute the program stored in the memory.

The processor may be a central processing unit (central processing unit, CPU), a network processor (network processor, NP), or a combination of a CPU and an NP.

Optionally, the processor may include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory may include a volatile memory (volatile memory), for example, a random access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

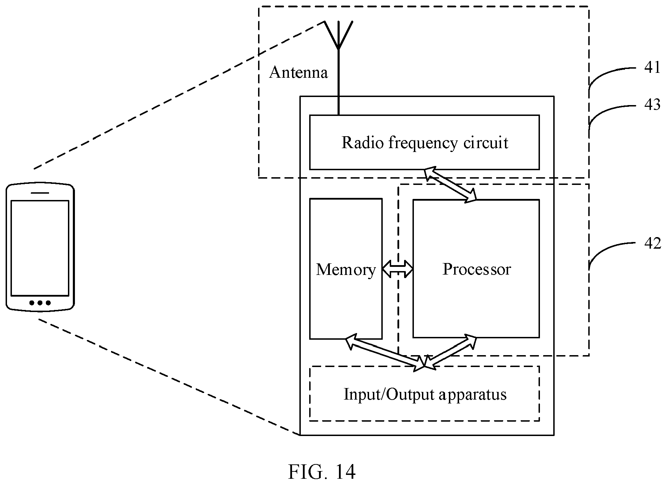

FIG. 14 is a simplified schematic diagram of a structure of a terminal device. For ease of understanding and illustration, an example in which the terminal device is a mobile phone is used in FIG. 14. As shown in FIG. 14, the terminal device includes a processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store the software programs and the data. These related programs may be loaded into the memory when the communication apparatus is delivered from a factory, or may be loaded into the memory as required later. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data entered by a user and output data to the user. It should be noted that some types of terminal devices may not have the input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data. For ease of description, FIG. 14 shows only one memory and one processor. In an actual terminal device product, there may be one or more processors and one or more memories. The memory may also be referred to as a storage medium, a storage device, or the like. The memory may be independent of the processor, or may be integrated with the processor. This is not limited in this embodiment of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 14, the terminal device includes a receiving unit 41, a processing unit 42, and a sending unit 43. The receiving unit 41 may also be referred to as a receiver, a receiving machine, a receiving circuit, or the like. The sending unit 43 may also be referred to as a transmitter, a transmitting device, a transmitting machine, a transmitting circuit, or the like. The processing unit may also be referred to as a processor, a processing board, a processing module, a processing apparatus, or the like.

For example, in an embodiment, the receiving unit 41 is configured to perform a function of the terminal device in S101 and S102 in the embodiment shown in FIG. 7, and the sending unit 43 is configured to perform a function of the terminal device in S103 in the embodiment shown in FIG. 7.

For example, in another embodiment, the receiving unit 41 is configured to perform a function of the terminal device in S201 in the embodiment shown in FIG. 8, and the sending unit 43 is configured to perform a function of the terminal device in S202 in the embodiment shown in FIG. 8.

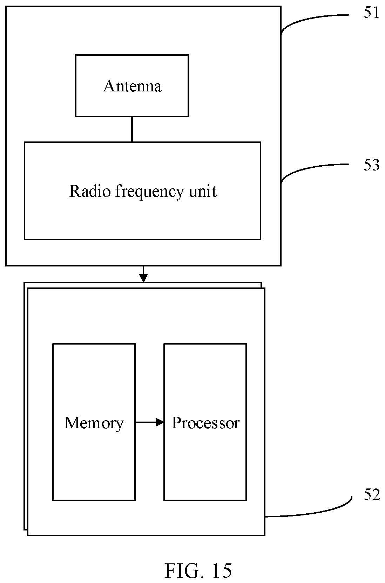

FIG. 15 is a simplified schematic diagram of a structure of a network device. The network device includes a part 52 and a part for radio frequency signal receiving/sending and conversion. The part for radio frequency signal receiving/sending and conversion further includes a receiving unit 51 and a sending unit 53 (which may also be collectively referred to as a transceiver unit). The part for radio frequency signal receiving/sending and conversion is mainly configured to: send/receive a radio frequency signal and perform conversion between a radio frequency signal and a baseband signal. The part 52 is mainly configured to perform baseband processing, control the network device, and so on. The receiving unit 51 may also be referred to as a receiver, a receiver machine, a receiver circuit, or the like. The sending unit 53 may also be referred to as a transmitter, a transmitting device, a transmitter machine, a transmitter circuit, or the like. The part 52 is usually a control center of the network device, may be usually referred to as a processing unit, and is configured to control the network device to perform a step performed by the network device in FIG. 7 and FIG. 8. For details, refer to descriptions of the foregoing related parts.

The part 52 may include one or more boards. Each board may include one or more processors and one or more memories. The processor is configured to read and execute a program in the memory to implement a baseband processing function and control the network device. If there are a plurality of boards, the boards may be interconnected to enhance a processing capability. In an optional implementation, a plurality of boards may share one or more processors, or a plurality of boards may share one or more memories, or a plurality of boards may simultaneously share one or more processors.

For example, in an embodiment, the receiving unit 51 is configured to perform a function of the network device in S103 in the embodiment shown in FIG. 7, and the sending unit 53 is configured to perform a function of the network device in S101 and S102 in the embodiment shown in FIG. 7.

For example, in another embodiment, the receiving unit 51 is configured to perform a function of the network device in S202 in the embodiment shown in FIG. 8, and the sending unit 53 is configured to perform a function of the network device in S201 in the embodiment shown in FIG. 8.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, division into units is merely logical function division and may be other division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of the embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk drive, a magnetic tape, a magnetic disk, or an optical medium, for example, a digital versatile disc (digital versatile disc, DVD), or a semiconductor medium, for example, a solid-state drive (solid state disk, SSD).

## Claims

1. A data transmission method, comprising:
receiving, by a first terminal device, downlink control information DCI from a network device, wherein the DCI is used to schedule uplink transmission or sidelink transmission, and the DCI is used to indicate data transmission of the first terminal device, or used to indicate the first terminal device to assist in forwarding data of a second terminal device; and
performing, by the first terminal device, the uplink transmission or the sidelink transmission based on the DCI.

2. The method according to claim 1, wherein if the DCI is used to indicate the first terminal device to assist in forwarding the data of the second terminal device, the DCI is further used to indicate an identifier of the second terminal device.

3. The method according to claim 1 or 2, wherein the DCI comprises first indication information, wherein the first indication information is used to indicate the data transmission of the first terminal device, or used to indicate the first terminal device to assist in forwarding the data of the second terminal device.

4. The method according to claim 3, wherein if the DCI is used to indicate the first terminal device to assist in forwarding the data of the second terminal device, the DCI further comprises second indication information, wherein the second indication information is used to indicate the identifier of the second terminal device.

5. The method according to claim 1 or 2, wherein the first terminal device stores a first identifier and at least one second identifier of the first terminal device; and
if the DCI is scrambled by the first identifier, the DCI is used to indicate the data transmission of the first terminal device; or
if the DCI is scrambled by the second identifier, the DCI is used to indicate to assist in forwarding the data of the second terminal device.

6. The method according to claim 5, wherein if the DCI is scrambled by the second identifier, the DCI comprises third indication information, wherein the third indication information is used to indicate the identifier of the second terminal device.

7. The method according to claim 5, wherein the terminal device stores a correspondence between the second identifier and the identifier of the second terminal device; and
if the DCI is scrambled by the second identifier, the second identifier is used to indicate the identifier of the second terminal device.

8. A data transmission method, comprising:
sending data of a second terminal device or data of a first terminal device to the first terminal device; and
sending downlink control information DCI to the first terminal device, wherein the DCI is used to schedule sidelink transmission, and the DCI is used to indicate data transmission of the first terminal device, or used to indicate the first terminal device to assist in forwarding data of the second terminal device.

9. A data transmission method, comprising:
sending downlink control information DCI to a first terminal device, wherein the DCI is used to schedule uplink transmission, and the DCI is used to indicate data transmission of the first terminal device, or used to indicate the first terminal device to assist in forwarding data of a second terminal device; and
receiving data transmitted by the first terminal device.

10. The method according to claim 8 or 9, wherein if the DCI is used to indicate the first terminal device to assist in forwarding the data of the second terminal device, the DCI is further used to indicate an identifier of the second terminal device.

11. The method according to any one of claims 8 to 10, wherein the DCI comprises first indication information, wherein the first indication information is used to indicate the data transmission of the first terminal device, or used to indicate the first terminal device to assist in forwarding the data of the second terminal device.

12. The method according to claim 11, wherein if the DCI is used to indicate the first terminal device to assist in forwarding the data of the second terminal device, the DCI further comprises second indication information, wherein the second indication information is used to indicate the identifier of the second terminal device.

13. The method according to any one of claims 8 to 10, wherein the first terminal device stores a first identifier and at least one second identifier of the first terminal device; and
if the DCI is scrambled by the first identifier, the DCI is used to indicate the data transmission of the first terminal device; or
if the DCI is scrambled by the second identifier, the DCI is used to indicate to assist in forwarding the data of the second terminal device.

14. The method according to claim 13, wherein if the DCI is scrambled by the second identifier, the DCI comprises third indication information, wherein the third indication information is used to indicate the identifier of the second terminal device.

15. The method according to claim 13, wherein the terminal device stores a correspondence between the second identifier and the identifier of the second terminal device; and
if the DCI is scrambled by the second identifier, the second identifier is used to indicate the identifier of the second terminal device.

16. A data transmission apparatus, comprising:
a transceiver unit, configured to receive downlink control information DCI from a network device, wherein the DCI is used to schedule uplink transmission or sidelink transmission, and the DCI is used to indicate data transmission of a first terminal device, or used to indicate the first terminal device to assist in forwarding data of a second terminal device; and
the transceiver unit is further configured to perform uplink transmission or sidelink transmission based on the DCI.

17. The apparatus according to claim 16, wherein if the DCI is used to indicate the first terminal device to assist in forwarding the data of the second terminal device, the DCI is further used to indicate an identifier of the second terminal device.

18. The apparatus according to claim 16 or 17, wherein the DCI comprises first indication information, wherein the first indication information is used to indicate the data transmission of the first terminal device, or used to indicate the first terminal device to assist in forwarding the data of the second terminal device.

19. The apparatus according to claim 18, wherein if the DCI is used to indicate the first terminal device to assist in forwarding the data of the second terminal device, the DCI further comprises second indication information, wherein the second indication information is used to indicate the identifier of the second terminal device.

20. The apparatus according to claim 16 or 17, wherein the first terminal device stores a first identifier and at least one second identifier of the first terminal device; and
if the DCI is scrambled by the first identifier, the DCI is used to indicate the data transmission of the first terminal device; or
if the DCI is scrambled by the second identifier, the DCI is used to indicate to assist in forwarding the data of the second terminal device.

21. The apparatus according to claim 20, wherein if the DCI is scrambled by the second identifier, the DCI comprises third indication information, wherein the third indication information is used to indicate the identifier of the second terminal device.

22. The apparatus according to claim 21, wherein the terminal device stores a correspondence between the second identifier and the identifier of the second terminal device; and
if the DCI is scrambled by the second identifier, the second identifier is used to indicate the identifier of the second terminal device.

23. A data transmission apparatus, comprising:
a transceiver unit, configured to send data of a second terminal device or data of a first terminal device to the first terminal device; and send downlink control information DCI to the first terminal device, wherein the DCI is used to schedule sidelink transmission, and the DCI is used to indicate data transmission of the first terminal device, or used to indicate the first terminal device to assist in forwarding data of the second terminal device.

24. A data transmission apparatus, comprising:
a transceiver unit, configured to send downlink control information DCI to a first terminal device, wherein the DCI is used to schedule uplink transmission, and the DCI is used to indicate data transmission of the first terminal device, or used to indicate the first terminal device to assist in forwarding data of a second terminal device; and receive data transmitted by the first terminal device.

25. The apparatus according to claim 23 or 24, wherein if the DCI is used to indicate the first terminal device to assist in forwarding the data of the second terminal device, the DCI is further used to indicate an identifier of the second terminal device.

26. The apparatus according to any one of claims 23 to 25, wherein the DCI comprises first indication information, wherein the first indication information is used to indicate the data transmission of the first terminal device, or used to indicate the first terminal device to assist in forwarding the data of the second terminal device.

27. The apparatus according to claim 26, wherein if the DCI is used to indicate the first terminal device to assist in forwarding the data of the second terminal device, the DCI further comprises second indication information, wherein the second indication information is used to indicate the identifier of the second terminal device.

28. The apparatus according to any one of claims 23 to 25, wherein the first terminal device stores a first identifier and at least one second identifier of the first terminal device; and
if the DCI is scrambled by the first identifier, the DCI is used to indicate the data transmission of the first terminal device; or
if the DCI is scrambled by the second identifier, the DCI is used to indicate to assist in forwarding the data of the second terminal device.

29. The apparatus according to claim 28, wherein if the DCI is scrambled by the second identifier, the DCI comprises third indication information, wherein the third indication information is used to indicate the identifier of the second terminal device.

30. The apparatus according to claim 28, wherein the terminal device stores a correspondence between the second identifier and the identifier of the second terminal device; and
if the DCI is scrambled by the second identifier, the second identifier is used to indicate the identifier of the second terminal device.

31. A computer-readable storage medium, wherein the computer-readable storage medium stores instructions, and when the instructions are run, a communication device is enabled to perform the method according to any one of claims 1 to 15.

32. A data transmission apparatus, wherein the apparatus comprises a processor and a storage medium, the storage medium stores instructions, and when the instructions are run by the processor, the apparatus is enabled to perform the method according to any one of claims 1 to 15.
